# EUROPÄISCHE PATENTSCHRIFT

(11) **EP 2 531 063 B1**
(45) Veröffentlichungstag und Bekanntmachung des Hinweises auf die Patenterteilung: **17.12.2014**
(21) Anmeldenummer: 10776957.2
(22) Anmeldetag: 19.10.2010
(51) Int. Cl.: A47B 53/00, A47B 77/02, A47F 7/30, G03B 21/14, G06F 5/00

(54) **ANORDNUNG UND VERFAHREN ZUR VISUALISIERUNG VON DEKOREN IN EINEM VIRTUELLEN RAUM**
SYSTEM AND METHOD FOR VISUALIZING DECORS IN A VIRTUAL SPACE
AGENCEMENT ET PROCÉDÉ POUR LA VISUALISATION DE DÉCORS DANS UN ESPACE VIRTUEL

(30) Priorität: 07.02.2010 DE 102010007037
(43) Veröffentlichungstag der Anmeldung: 12.12.2012
(73) Patentinhaber: Fritz Egger GmbH & Co. OG, 3105 Unterradlberg (AT)
(72) Erfinder: TIEGELKAMP, Vicky, 10317 Berlin (DE)
(74) Vertreter: Cohausz & Florack
(86) Internationale Anmeldenummer: PCT/EP2010/065738
(87) Internationale Veröffentlichungsnummer: WO 2011/015672

(56) Entgegenhaltungen:
- US-A- 2 591 428
- US-A- 3 683 779
- US-A- 3 945 132
- US-A- 5 053 956
- US-A- 5 937 081

## Beschreibung

Die Erfindung betrifft eine Anordnung und ein Verfahren zur Visualisierung von Dekoren in einem virtuellen Raum. Die Erfindung betrifft insbesondere ein virtuelles Design-Studio.

Es sind bereits verschiedene Systeme bzw. Verfahren zur Visualisierung von Dekoren, insbesondere Holzdekoren bekannt. Die Anmelderin selbst verwendet beispielsweise ein computer- bzw. internetbasiertes Visualisierungswerkzeug, das es einem Nutzer ermöglicht, sich verschiedene Wohnraumsituationen anzusehen und dabei auszuprobieren, wie verschiedene Holzdekore in Kombination mit unterschiedlichen Wandfarben und Bodenbelägen wirken. Dieses Visualisierungswerkzeug hat sich in der Praxis bewährt. Die damit erreichbare optische Wirkung erscheint jedoch noch verbesserungsfähig.

Aus der US 3 945 132 A ist ein kombiniertes Präsentationssystem zur Verkaufsförderung von Möbeln und dergleichen bekannt, bei dem reale Möbel zusammen mit virtuellen Möbeln oder Einrichtungsgegenständen präsentiert werden. Das System umfasst eine Plattform mit darauf aufgestellten durchscheinenden Trennwänden, die als Projektionsflächen dienen. Die im Wesentlichen zweidimensionalen Trennwände sind zueinander abgewinkelt angeordnet und definieren Raumecken. An den Rückseiten der durchscheinenden Trennwände sind Projektoren angeordnet, mittels denen beispielsweise Möbel, Bilder oder Wanddekorationen auf die Trennwände projiziert werden können.

Die US 2 591 428 A offenbart eine Präsentationseinrichtung zur Verkaufsförderung von Möbeln, die eine zweidimensionale Projektionswand und mehrere Farb-Filmprojektoren umfasst. Die Filmprojektoren sind jeweils zur Aufnahme eines Farbfotofilms in Rollenform ausgebildet, wobei jeder Filmprojektor einen Wickeldrehknopf aufweist, um unterschiedliche Bilder der Farbfilme für deren Projektion zu positionieren. Die Filme enthalten einander ergänzende Teilflächenbilder, wie verschiedene Fußböden, Raumwände, Sessel und Fenstervorhänge.

Des Weiteren ist aus der US 5 053 956 A ein interaktives System für den Einzelhandel bekannt, umfassend eine Bildspeichervorrichtung, in der Bilder von zum Kauf angebotenen Produkten (z.B. Teppichen) gespeichert sind, eine mit der Bildspeichervorrichtung verbundene Bildindexvorrichtung, die Identifizierungsmittel für die gespeicherten Bilder enthält, eine Bildabfragevorrichtung und eine zweidimensionale Anzeigeeinrichtung (z.B. ein Video-Bildschirm) zur Anzeige der abgefragten Bilder. Ferner ist eine Vorrichtung zur Verarbeitung von Kaufabschlüssen vorgesehen, die eine Dateneingabevorrichtung umfasst, durch die das angezeigte Bild-Identifizierungsmittel automatisch eingegeben wird. Das System erlaubt auch die Bearbeitung von zusammengesetzten Bildern.

Die US 3 683 779 A offenbart ein Verfahren und eine Vorrichtung zur Dekorsimulation, z.B. die Simulation von nach Kundenwunsch gepolsterter Sitzmöbel. Dabei werden mehrere Diapositive aufeinandergelegt bzw. in Reihe angeordnet, die unterschiedliche, sich ergänzende Bildabschnitte beinhalten.

Schließlich offenbart die US 5 937 081 A ein Bildkompositionssystem mit einem Monitor und einer zentralen Bildverarbeitungsvorrichtung zur Anzeige eines von einem Nutzer ausgewählten Bildes. An der Bildverarbeitungsvorrichtung ist eine Kamera angeschlossen. Das System ermöglicht, eine reales Subjekt bzw. eine Person in das vom Nutzer ausgewählte Bild einzubeziehen. Accessoire-Teile, wie Hemden, Hosen, etc. sind in einer mit der zentralen Bildverarbeitungsvorrichtung verbundenen Speichervorrichtung gespeichert und können mit dem in das Bild einbezogenen Subjekt kombiniert werden.

Der vorliegenden Erfindung liegt die Aufgabe zugrunde, eine Anordnung bzw. ein Verfahren der eingangs genannten Art anzugeben, mit der/dem sich wahlweise verschiedene Dekoroberflächen besonders realitätsnah visualisieren lassen.

Gelöst wird diese Aufgabe durch eine Anordnung mit den Merkmalen des Anspruchs 1 bzw. durch ein Verfahren mit den Merkmalen des Anspruchs 14. Bevorzugte und vorteilhafte Ausgestaltungen der erfindungsgemäßen Anordnung und des erfindungsgemäßen Verfahrens sind in den Unteransprüchen angegeben.

Die erfindungsgemäße Anordnung stellt ein virtuelles Design-Studio dar und umfasst mindestens einen Beamer als Bildprojektor, insbesondere einen LCD- oder DLP-Beamer, und eine räumliche Projektionsfläche, die unterschiedliche Teilflächen umfasst, wobei der mindestens eine Bildprojektor mit einer Steuerung versehen ist, die derart ausgebildet ist, dass auf den Teilflächen der Projektionsfläche unterschiedliche Dekore, die aus einer Gruppe von unterschiedlichen Dekoren mittels der Steuerung auswählbar sind, visualisierbar sind, wobei die Gruppe von unterschiedlichen Dekoren insbesondere solche Dekore umfasst, die durch Scannen oder Digitalisieren von Oberflächenstrukturen aufweisenden Dekormustern erhalten wurden, und wobei die Projektionsfläche mindestens einen Korpus als Projektionsteilfläche umfasst.

Das erfindungsgemäße Verfahren ist dementsprechend gekennzeichnet durch die Verwendung mindestens eines Beamers als Bildprojektor, insbesondere LCD- oder DLP-Beamers, und einer räumlichen Projektionsfläche, die unterschiedliche Teilflächen umfasst, wobei der mindestens eine Bildprojektor derart gesteuert wird, dass auf den Teilflächen der Projektionsfläche unterschiedliche Dekore, die aus einer Gruppe von unterschiedlichen Dekoren mittels der Steuerung ausgewählt werden, visualisiert werden. Die Gruppe von unterschiedlichen Dekoren umfasst dabei insbesondere solche Dekore, die durch Scannen oder Digitalisieren von Oberflächenstrukturen aufweisenden Dekormustern erhalten wurden, z.B. Holzdielenmuster, Echtholzfurniere, mit Holzdekoren und Oberflächenstrukturen versehene Holzwerkstoffplatten, Natursteinplatten etc. Erfindungsgemäß umfasst die Projektionsfläche mindestens einen Korpus als Projektionsteilfläche. Der Korpus entspricht in seinen Abmessungen beispielsweise einem Küchen- oder Wohnraummöbel. Durch die Visualisierung von Dekoren und Oberflächenstrukturen (Texturen) auf dem dreidimensionalen Korpus wird die sehr realitätsnahe optische Wirkung verbessert.

Mit der erfindungsgemäßen Anordnung bzw. dem erfindungsgemäßen Verfahren werden somit Dekore, insbesondere solche, die Oberflächenstrukturen (Texturen) aufweisen, visualisiert, wodurch sich die optischen Eigenschaften eines entsprechenden Produktes, beispielsweise eines Fußbodenpaneels, einer Möbelfront oder Arbeitsplatte eindrucksvoll und besonders realitätsnah präsentieren lassen.

Die erfindungsgemäße Anordnung ermöglicht eine Präsentation individuell gestalteter Dekore und Oberflächenstrukturen in einem virtuellen Raum. Das Raumambiente ist dabei im Wesentlichen frei wählbar. Die erfindungsgemäße Visualisierung von Dekoren im virtuellen Raum verbessert die Präsentation bzw. Veranschaulichung von Dekoralternativen. Diese Art der Präsentation bringt dem Nutzer Sicherheit bei seiner Dekorauswahl, so dass diesbezügliche Entscheidungen schneller herbeigeführt werden können.

Sämtliche digital entwickelten Dekordaten können dabei mit ebenfalls digital vorliegenden Texturdaten (Oberflächenstrukturen) kombiniert und in ihrer dreidimensionalen Wirkung visualisiert werden, wobei sich Licht- und Glanzeffekte je nach Blickwinkel des Betrachters verändern.

Nach einer vorteilhaften Ausgestaltung der Erfindung umfasst die Projektionsfläche neben dem mindestens einen Korpus mindestens eine Wand sowie mindestens einen Fußbodenabschnitt.

Eine weitere vorteilhafte Ausgestaltung der Erfindung besteht darin, dass mit dem Bildprojektor oder mindestens einem der Bildprojektoren Licht- und/oder Glanzeffekte auf der Projektionsfläche visualisiert werden. Auch diese Ausgestaltung verbessert die realitätsnahe optische Wirkung.

Als Bildprojektor oder Bildprojektoren werden bei der erfindungsgemäßen Anordnung vorzugsweise solche verwendet, mit denen Betrachtern der Visualisierung eine dreidimensionale Bildwirkung vermittelt wird bzw. vermittelbar ist.

Die Steuerung des Bildprojektors oder der Bildprojektoren ist derart ausgebildet, dass auf der Projektionsfläche komplementär zu dem oder den Dekoren ein oder mehrere Objekte, insbesondere Elektrogeräte, Armaturen, Griffe, Beschläge und/oder Wohnaccessoires visualisierbar sind, wobei das jeweilige Objekt aus einer Gruppe unterschiedlicher Objekte mittels der Steuerung ausgewählt werden kann.

Nach einer weiteren bevorzugten Ausgestaltung der erfindungsgemäßen Anordnung ist an der dem mindestens einem Bildprojektor zugeordneten Steuerung ein Lesegerät zur Erfassung von an unterschiedlichen Dekormustern angebrachten Identifizierungsmitteln angeschlossen ist. Der Nutzer der Anordnung kann somit das jeweilige Dekormuster (Original) mit der virtuellen Darstellung des Dekors einschließlich einer zugehörigen Oberflächenstruktur (Textur) vergleichen. Insbesondere kann hierdurch einem Nutzer eine Dekorauswahl erleichtert werden, da es vielen Menschen leichter fällt, Dekore anhand von Originalmustern als anhand von Bilddarstellungen auswählen.

Zur Sicherstellung einer farbgetreuen bzw. farbrichtigen Ausgabe der Dekore bei deren Visualisierung ist ferner vorgesehen, dass mindestens ein zur Digitalisierung von Mustern existierender Dekore, Schichtstoffe, Echtmaterialien und/oder von dreidimensionalen Oberflächenstrukturen verwendeter Scanner sowie zur Visualisierung der Dekore verwendete Ausgabegeräte, insbesondere Bildschirme, Bildprojektoren und/oder Farbdrucker, kalibriert und/oder profiliert werden.

Nachfolgend wird die Erfindung anhand einer mehrere Ausführungsbeispiele darstellenden Zeichnung näher erläutert. Es zeigen in schematischer Darstellung:
- Fig. 1: eine erfindungsgemäße Anordnung zur dreidimensionalen Visualisierung von Dekoren in Kombination mit Oberflächenstrukturen, in perspektivischer Darstellung, wobei sich die Anordnung in einem abgeschalteten Zustand oder Bereitschaftszustand befindet;
- Fig. 2: die Anordnung gemäß Fig. 1 in einer ersten Funktionssituation (Visualisierungssituation);
- Fig. 3: die Anordnung gemäß Fig. 1 in einer zweiten Funktionssituation (Visualisierungssituation);
- Fig. 4: die Anordnung gemäß Fig. 1 in einer dritten Funktionssituation (Visualisierungssituation);
- Fig. 5: ein Präsentationsraum mit einer erfindungsgemäßen Anordnung zur dreidimensionalen Visualisierung von Dekoren in Kombination mit Oberflächenstrukturen, in perspektivischer Darstellung; und
- Fig. 6: der Präsentationsraum mit der Anordnung der Fig. 5, in einer Grundriss-Darstellung.

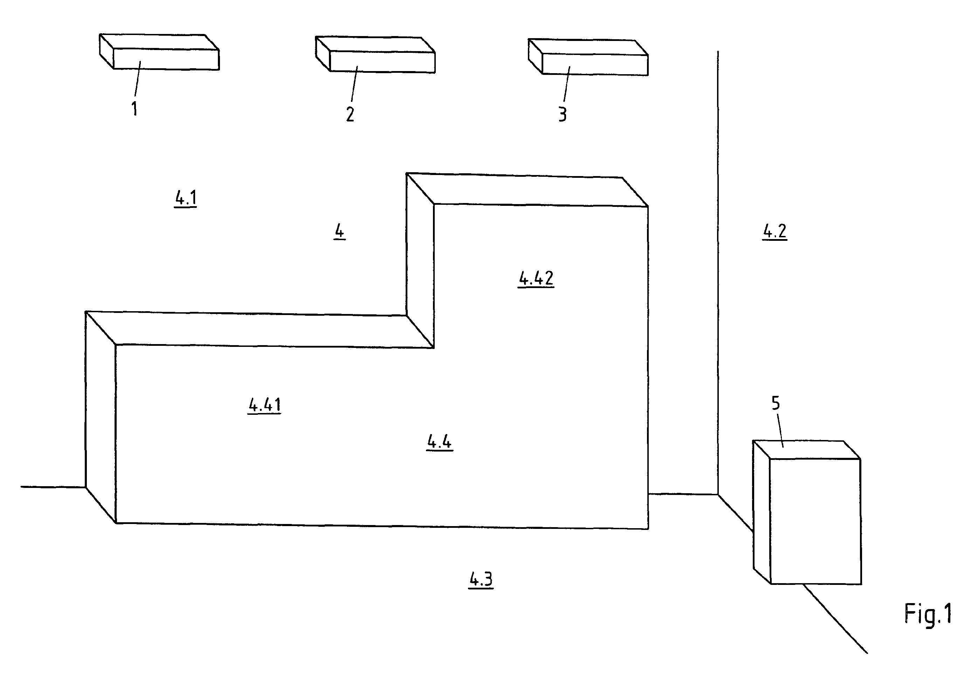

Die in den Figuren 1 bis 4 dargestellte erfindungsgemäße Anordnung weist mehrere Bildprojektoren ("Beamer") 1, 2, 3 und eine Projektionsfläche 4 zur Visualisierung von Dekoren auf. Die Projektionsfläche 4 besteht aus einem Abschnitt eines Raumes, der durch eine Raumecke definierende Wände 4.1, 4.2 und einen Fußbodenabschnitt 4.3 gebildet ist. Ferner umfasst der Raumabschnitt bzw. die Projektionsfläche 4 einen Korpus 4.4. Der Korpus 4.4 ist aus unterschiedlich hohen quaderförmigen Korpusabschnitten 4.41, 4.42 zusammengesetzt. Er ist mit einer einfarbigen Beschichtung/Lackierung als Projektionsfläche versehen. Vorzugsweise weist der Korpus 4.4 eine graue Farbbeschichtung auf. An der Vorderseite des Korpus sind (in Fig. 1 nicht gezeigte) Griffe und/oder Beschläge angebracht.

Die Erfindung nutzt hier eine Multi-Beamer-Technologie. Die Bildprojektoren ("Beamer") 1, 2, 3 sind vorzugsweise an einer Raumdecke abgehängt. Bei den Bildprojektoren 1, 2, 3 handelt es sich um LCD- oder DLP-Beamer. Den Bildprojektoren 1, 2, 3 ist ein als Steuerung dienender Computer 5 oder dergleichen zugeordnet.

Zur Visualisierung verschiedener Dekore mittels der erfindungsgemäßen Anordnung werden digitale Dekor- und/oder Strukturdaten genutzt. Diese Daten stammen aus digitalen Abtastungen. Hierzu werden neu entwickelte Design-Vorlagen und/oder Muster bestehender Dekore und Strukturen unter Verwendung eines hochauflösenden Scanners digitalisiert. Die digitalen Dekor- und/oder Strukturdaten können beispielsweise auch von Tiefdruckverfahren ausführenden Druckereien oder sonstigen externen Anbietern stammen. Bei den digitalisierten Dekoren handelt es sich insbesondere um Holzdekore, Fliesendekore, Natursteindekore und/oder Fantasiedekore.

Die digitalen Dekor- und/oder Strukturdaten werden in einer Dekordatenbank hinterlegt. Vorzugsweise handelt es sich dabei um eine zentrale Datenbank, in der die Daten verwaltet und gegebenenfalls durch neue Dekor- und/oder Strukturdaten angereichert werden.

Die digitalen Dekore und Strukturen (Texturen) werden mit einer Bildbearbeitungs- und Präsentationssoftware aufbereitet und mittels eines oder mehrerer Bildprojektoren auf eine oder mehrere bestimmte Flächen des vorgegebenen Raums der Anordnung projiziert. Das Ergebnis ist ein fotorealistisches, dreidimensionales Abbild eines ausgewählten Dekors (z.B. Holzdekors) einschließlich zugehöriger oder ausgewählter Oberflächenstruktur (z.B. Holzporen) in einem Raumambiente. Das Raumambiente ist veränderbar bzw. lässt sich aus einer Vielzahl verschiedener gespeicherter Raum- und/oder Möbelsituationen auswählen.

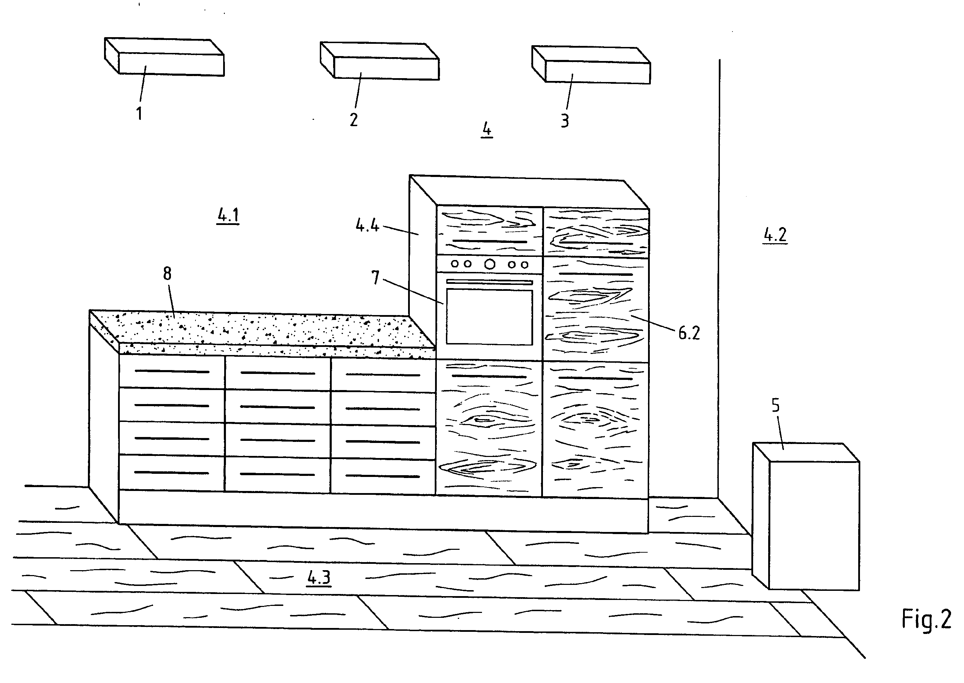

So ist beispielsweise in Fig. 2 eine Küchenzeile bestehend aus Unterschränken 6.1 und Hochschränken 6.2 dargestellt. Das Dekor sowie die Oberflächenstruktur der Schranktürfronten lassen sich dabei unabhängig vom Dekor und der Struktur der Arbeitsplatte 8 und/oder des Fußbodens 4.3 sowie der Wandfarbe variieren. Insbesondere kann mittels eines der Beamer 1, 2, 3 das Bild eines Elektrogerätes 7, beispielsweise eines Backofens oder eines anderen Objektes auf den Korpus 4.4 bzw. die Wand 4.1 projiziert werden.

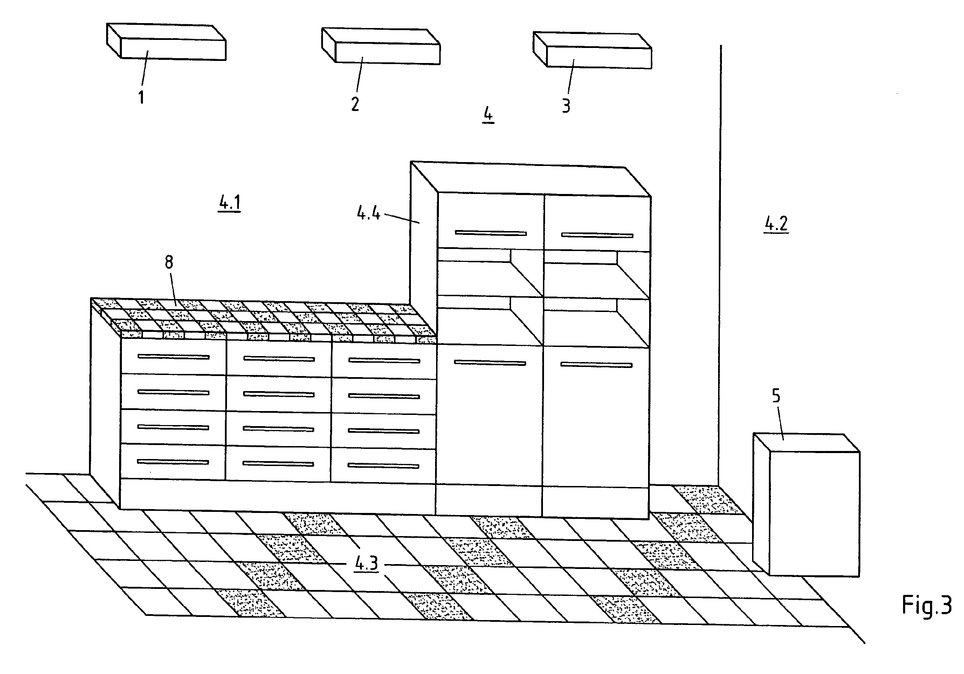

In Fig. 3 ist eine Raum- bzw. Möbelsituation visualisiert, in welcher auf den Korpus 4.4 von der Situation gemäß Fig. 2 abweichende Dekore projiziert sind. Insbesondere sind hier Regalfächer auf den höheren Korpusabschnitt 4.42 projiziert (vgl. Fig. 1). Während in der Situation gemäß Fig. 2 ein Holzdielenfußboden visualisiert ist, wird in der Situation gemäß Fig. 3 ein Fliesenboden virtuell dargestellt.

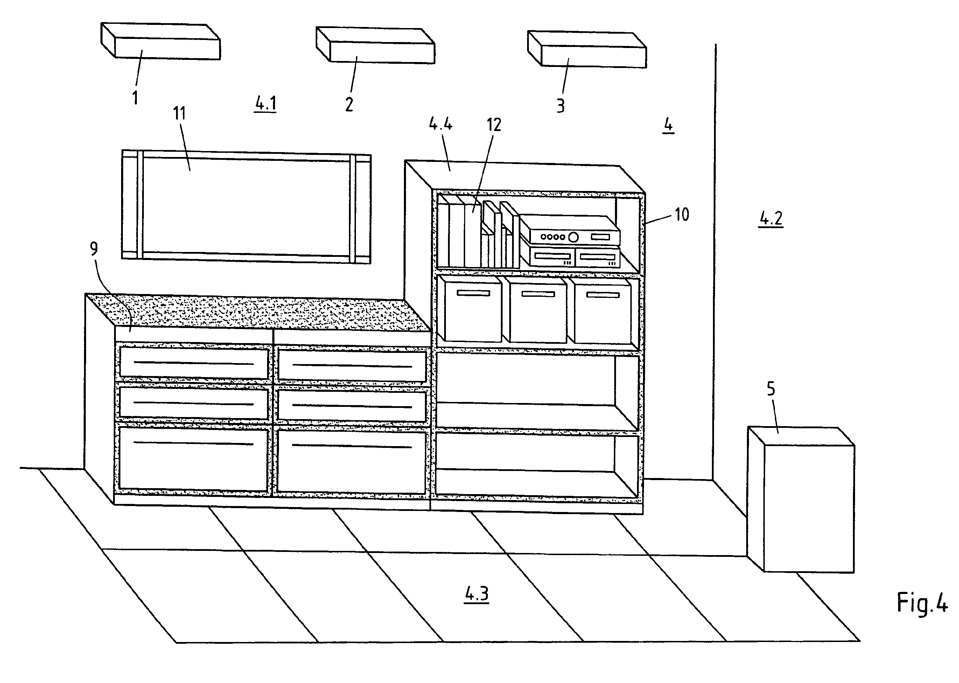

Die Fig. 4 zeigt, dass auf demselben Korpus 4.4 beispielsweise auch ein Schubladen-Sideboard 9 mit einem Bücherregal 10 visualisiert werden kann, wobei an die Wand das Bild eines Flachbild-Fernsehgerätes 11 projiziert ist.

Mit den Bildprojektoren 1, 2, 3 lassen sich somit beispielsweise Schranktüren, Schubladenfronten, Sockelleisten, Arbeitsplatten (8), Fliesenspiegel, Wandverkleidungen, Regalbretter, Bücher (12), Bilder, Fußbodenbeläge aus Holz, Fliesen oder Naturstein, Elektrogeräte (7), Griffe, Beschläge, Armaturen, etc. auf der Projektionsfläche 4 der erfindungsgemäßen Anordnung visualisieren.

Mit mindestens einem der Bildprojektoren 1, 2, 3 können dabei auch Glanzeffekte und/oder Licht- bzw. Schatteneffekte auf der Projektionsfläche 4 visualisiert werden.

Die erfindungsgemäße Anordnung kann zudem einen (nicht dargestellten) Farbdrucker oder Farbplotter umfassen, mit dem das visualisierte Dekor (einschließlich Struktur) als Muster farbverbindlich auf Papier oder einem anderen Substrat ausgedruckt werden kann. Die virtuelle Projektion und das Muster können dann jederzeit verglichen werden.

Die erfindungsgemäße Anordnung ist insbesondere zur Installation in einem Verkaufsraum ("Showroom") und/oder auf einem Messestand, einschließlich einer mobilen Präsentationseinrichtung (z.B. einem Lastwagen) bestimmt.

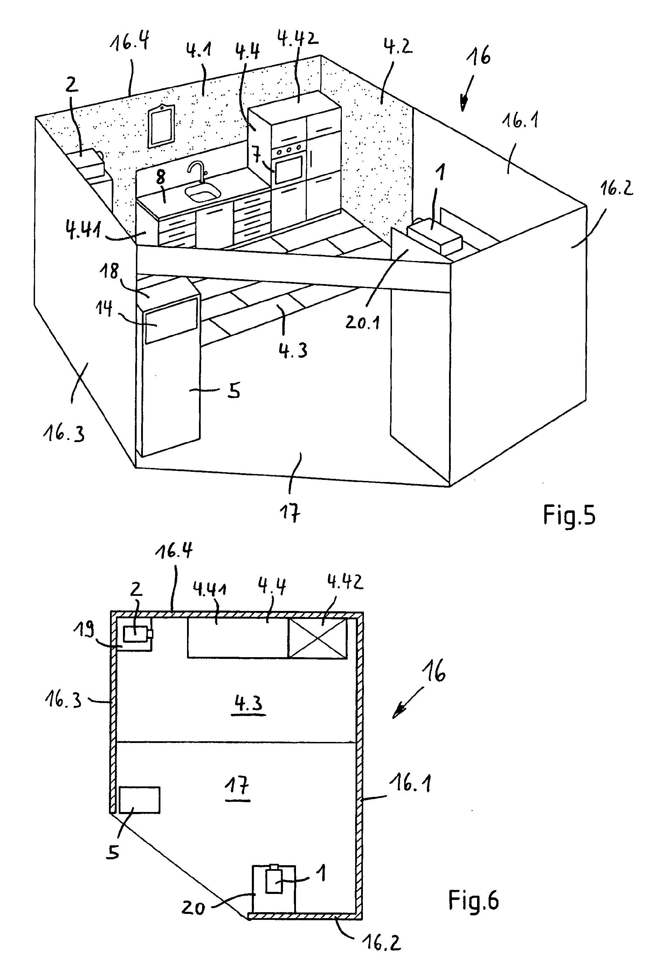

Das in den Figuren 5 und 6 dargestellte Ausführungsbeispiel beinhaltet wiederum einen Korpus 4.4, der aus unterschiedlich hohen im Wesentlichen quaderförmigen Korpusabschnitten 4.41, 4.42 zusammengesetzt ist. Die Sichtflächen des Korpus 4.4 sind mit einer einfarbigen Beschichtung/Lackierung versehen, die als Projektionsfläche dient.

Des Weiteren umfasst die in den Figuren 5 und 6 dargestellte Anordnung zwei hochauflösende Bildprojektoren (Beamer) 1, 2, einen zur Steuerung der Bildprojektoren 1, 2 dienenden Computer 5 sowie eine Bedieneinheit 14, die vorzugsweise als Touchscreen ausgebildet ist. Der Bildprojektor 1 ist ausgerichtet, um Dekore insbesondere auf die Vorderfläche des Korpus 4.4 zu projizieren, während der Bildprojektor 2 ausgerichtet ist, um Dekore auf eine Seitenfläche des Korpus 4.4 zu projizieren. Die Hauptstrahlachsen der Bildprojektoren 1, 2 verlaufen somit quer zueinander. Durch diese Ausrichtung der Bildprojektoren 1, 2 lässt sich ein besonders plastischer Raumeindruck vermitteln.

Der Korpus 4.4, die Bildprojektoren 1, 2, der Computer 5 und der Touchscreen sind hier in einem Präsentationsraum 16 installiert. Der Präsentationsraum 16 ist aus mehreren Wänden 16.1, 16.2, 16.3, 16.4 und einem Fußboden 17 gebildet. Die Wände 16.1 bis 16.4 und der Fußboden 17 weisen Flächenbereiche 4.1, 4.2, 4.3 auf, die als Projektionsfläche dienen und daher ebenfalls mit einer neutralen, einfarbigen Beschichtung/Lackierung versehen sind. Der Computer (Steuerung) 5 und der Touchscreen 14 als Bedieneinheit können beispielsweise in einem Hochschrank 18 oder dergleichen integriert sein. Die Bildprojektoren 1, 2 sind an bzw. auf säulenförmigen Halterungen 19, 20 montiert und vorzugsweise hinter Sichtblenden 20.1 teilweise verdeckt angeordnet.

Optional ist an der Steuerung 5 ein Lesegerät (nicht gezeigt) angeschlossen, das der interaktiven Erkennung von Dekormustern dient. Die Dekormuster sind hierzu mit Identifizierungsmitteln in Form von RFID-Transpondern oder optisch erfassbaren Barcodes, vorzugsweise kreisförmigen Barcodes versehen. Die von dem Lesegerät und dem daran angeschlossenen Computer 5 aufgrund der Identifizierungsmittel erkannten Dekormuster werden direkt in die mittels der Bildprojektoren 1, 2 dargestellte virtuelle Raumsituation eingespielt.

Des Weiteren umfasst die Visualisierung von Dekoren und Oberflächenstrukturen im Rahmen des erfindungsgemäßen Verfahrens die Verwendung einer Auftragsabwicklungseinrichtung, die einen Computer, einen Bildschirm sowie einen Farbdrucker oder -plotter umfasst. Diese Einrichtung ermöglicht einen individualisierten Dekordigitaldruck und wird vorzugsweise professionellen Anwendern (Händlern und Verarbeitern) zur Verfügung gestellt ("VDS Profi"). Ziel dabei ist, dass die Qualität der visualisierten und/oder gedruckten bzw. geplotteten Dekore von der Bestellung bis zur Herstellung durchgängig farbverbindlich ist und damit ein bezüglich Kosten und Durchlaufzeiten hoch effizienter Auftragsabwicklungsprozess geschaffen wird. Die Auftragsabwicklungseinrichtung ermöglicht eine automatische Auftragsabwicklung hinsichtlich der Produktion von mit Dekoren und Oberflächenstrukturen versehenen Mustern und/oder Holzwerkstofferzeugnissen.

Für einzelne Objekte (Bauvorhaben) sowie Kleinmengen werden das Dekor und die Oberflächenstruktur des jeweiligen Holzwerkstofferzeugnisses vorzugsweise unter Verwendung eines Digitaldruckverfahrens hergestellt.

Bei der Herstellung in Großserie werden das Dekor und die Oberflächenstruktur des jeweiligen Holzwerkstofferzeugnisses dagegen unter Verwendung eines Tiefdruckverfahrens hergestellt. Dies setzt die Herstellung mindestens eines Druckzylinders und mindestens einer strukturgebenden Walze oder dergleichen auf Basis der gespeicherten Dekordaten bzw. Oberflächenstrukturdaten voraus.

Das zentrale Dekordatenmanagement wird bzw. ist mit einem Produktinformationsmanagement-System verknüpft. Unter Produktinformationsmanagement (PIM) wird die Bereitstellung von Produktinformationen für den Einsatz in verschiedenen Ausgabemedien bzw. Vertriebskanälen sowie für unterschiedliche Standorte verstanden. Die Verwaltung, Pflege und Modifikation der Produktinformationen erfolgt in einem zentralen System, vorzugsweise in der zentralen Dekordatenbank oder in Verbindung mit derselben. Jeder Standort bzw. Kanal in dem erfindungsgemäßen Gesamtprozess kann somit ohne großen Ressourcenaufwand mit übereinstimmenden Produktinformationen über ein Datenübertragungsnetz versorgt werden. Das PIM-System ermöglicht eine effiziente Datenübernahme, Datenverwaltung, Datenanreicherung und Datenausgabe. Es konsolidiert alle Produktinformationen in einer Datenbank. Die Produktinformationen können aus der zentralen Datenhaltung für die Erstellung von Mustern (Musterservice), Broschüren, Katalogen und/oder Kollektionen herangezogen werden.

Mehrere erfindungsgemäße, an verschiedenen Orten befindliche virtuelle Design-Studios werden zentral verwaltet und automatisiert mit Updates versehen.

Die Ausführung der Erfindung ist nicht auf die vorstehend beschriebenen Ausführungsbeispiele beschränkt. Vielmehr sind zahlreiche Varianten denkbar, die auch bei abweichender Gestaltung von dem in den beiliegenden Ansprüchen angegebenen Erfindungsgedanken Gebrauch machen. So ist es beispielsweise grundsätzlich auch möglich, lediglich einen einzigen Bildprojektor in einer erfindungsgemäßen Anordnung zur Visualisierung von Dekoren und Oberflächenstrukturen auf einem neutralen Korpus gemäß Fig. 1 zu verwenden.

## Patentansprüche

1. Anordnung zur Visualisierung von Dekoren, insbesondere Holzdekoren, mit mindestens einem Beamer als Bildprojektor (1, 2, 3), insbesondere LCD- oder DLP-Beamer, und einer räumlichen Projektionsfläche (4), die unterschiedliche Teilflächen (4.1, 4.2, 4.3, 4.4) umfasst, wobei der mindestens eine Bildprojektor (1, 2, 3) mit einer Steuerung (5) versehen ist, die derart ausgebildet ist, dass auf den Teilflächen (4.1, 4.2, 4.3, 4.4) der Projektionsfläche (4) unterschiedliche Dekore, die aus einer Gruppe von unterschiedlichen Dekoren mittels der Steuerung (5) auswählbar sind, visualisierbar sind, wobei die Gruppe von unterschiedlichen Dekoren insbesondere solche Dekore umfasst, die durch Scannen oder Digitalisieren von Oberflächenstrukturen aufweisenden Dekormustern erhalten wurden, und wobei die Projektionsfläche (4) mindestens einen Korpus (4.4) als Projektionsteilfläche umfasst.

2. Anordnung nach Anspruch 1, **dadurch gekennzeichnet, dass** die Steuerung (5) derart ausgebildet ist, dass auf der Projektionsfläche (4, 4.1, 4.2, 4.3, 4.4) mindestens ein Dekor, das aus einer Gruppe unterschiedlicher Dekore mittels der Steuerung (5) auswählbar ist, überlagert mit mindestens einer Oberflächenstruktur, die aus einer Gruppe unterschiedlicher Oberflächenstrukturen mittels der Steuerung (5) auswählbar ist, visualisierbar ist.

3. Anordnung nach Anspruch 1 oder 2, **dadurch gekennzeichnet, dass** die Projektionsfläche (4) mindestens eine Wand (4.1, 4.2) und einen Fußbodenabschnitt (4.3) umfasst.

4. Anordnung nach einem der Ansprüche 1 bis 3, **dadurch gekennzeichnet, dass** der mindestens eine Korpus (4.4) mit Griffen und/oder Beschlägen versehen ist.

5. Anordnung nach einem der Ansprüche 1 bis 4, **dadurch gekennzeichnet, dass** der mindestens eine Korpus (4.4) aus mindestens zwei unterschiedlich hohen und/oder großen Korpusabschnitten (4.41, 4.42) zusammengesetzt ist.

6. Anordnung nach einem der Ansprüche 1 bis 5, **dadurch gekennzeichnet, dass** der mindestens eine Korpus (4.4) mit einer einfarbigen Beschichtung/Lackierung als Projektionsfläche versehen ist.

7. Anordnung nach einem der Ansprüche 1 bis 6, **dadurch gekennzeichnet, dass** die Steuerung (5) derart ausgebildet ist, dass auf der Projektionsfläche (4, 4.4) komplementär zu dem mindestens einen Dekor ein oder mehrere Objekte, insbesondere Elektrogeräte (7), Armaturen, Griffe, Beschläge und/oder Wohnaccessoires (12), das/die aus einer Gruppe unterschiedlicher Objekte mittels der Steuerung auswählbar sind, visualisierbar sind.

8. Anordnung nach einem der Ansprüche 1 bis 7, **gekennzeichnet durch** mehrere Bildprojektoren (1, 2, 3), die unterschiedlichen Teilflächen (4.1, 4.2, 4.3, 4.4) der Projektionsfläche (4) zugeordnet sind.

9. Anordnung nach einem der Ansprüche 1 bis 8, **dadurch gekennzeichnet, dass** die Steuerung (5) derart ausgebildet ist, dass mittels des mindestens einen Bildprojektors oder der Bildprojektoren (1, 2, 3) eine dreidimensionale Bildwirkung erzeugt wird.

10. Anordnung nach einem der Ansprüche 1 bis 9, **dadurch gekennzeichnet, dass** an der Steuerung (5) ein Lesegerät zur Erfassung von an unterschiedlichen Dekormustern angebrachten Identifizierungsmitteln angeschlossen ist.

11. Verfahren zur Visualisierung von Dekoren, **gekennzeichnet durch** die Verwendung mindestens eines Beamers als Bildprojektor (1, 2, 3), insbesondere LCD- oder DLP-Beamers, und einer räumlichen Projektionsfläche (4), die unterschiedliche Teilflächen (4.1, 4.2, 4.3, 4.4) umfasst, wobei der mindestens eine Bildprojektor (1, 2, 3) derart gesteuert wird, dass auf den Teilflächen (4.1, 4.2, 4.3, 4.4) der Projektionsfläche (4) unterschiedliche Dekore, die aus einer Gruppe von unterschiedlichen Dekoren mittels der Steuerung (5) ausgewählt werden, visualisiert werden, wobei die Gruppe von unterschiedlichen Dekoren insbesondere solche Dekore umfasst, die **durch** Scannen oder Digitalisieren von Oberflächenstrukturen aufweisenden Dekormustern erhalten wurden, und wobei die Projektionsfläche (4) mindestens einen Korpus (4.4) als Projektionsteilfläche umfasst.

12. Verfahren nach Anspruch 11, **dadurch gekennzeichnet, dass** mindestens eines der Dekore überlagert mit mindestens einer Oberflächenstruktur, die aus einer Gruppe unterschiedlicher Oberflächenstrukturen ausgewählt wird, visualisiert wird.

13. Verfahren nach Ansprüche 11 oder 12, **dadurch gekennzeichnet, dass** der mindestens eine Korpus (4.4) mit Griffen und/oder Beschlägen versehen wird.

14. Verfahren nach einem der Ansprüche 11 bis 13, **dadurch gekennzeichnet, dass** der mindestens eine Korpus (4.4) aus mindestens zwei unterschiedlich hohen und/oder großen Korpusabschnitten (4.41, 4.42) zusammengesetzt ist.

15. Verfahren nach einem der Ansprüche 11 bis 14, **dadurch gekennzeichnet, dass** der mindestens eine Korpus (4.4) mit einer einfarbigen Beschichtung/Lackierung als Projektionsfläche versehen wird.

16. Verfahren nach einem der Ansprüche 11 bis 15, **dadurch gekennzeichnet, dass** der mindestens eine Bildprojektor (1, 2, 3) derart gesteuert wird, dass auf der Projektionsfläche komplementär zu dem mindestens einen Dekor ein oder mehrere Objekte (7, 11, 12), insbesondere Elektrogeräte, Armaturen und/oder Wohnaccessoires, das/die aus einer Gruppe unterschiedlicher Objekte (7, 11, 12) mittels der Steuerung (5) auswählbar sind, visualisiert werden.

17. Verfahren nach einem der Ansprüche 11 bis 16, **dadurch gekennzeichnet, dass** mehrere Bildprojektoren verwendet werden, wobei die Bildprojektoren (1, 2, 3) unterschiedlichen Teilflächen (4.1, 4.2, 4.3, 4.4) der Projektionsfläche (4) zugeordnet werden.

18. Verfahren nach einem der Ansprüche 11 bis 17, **dadurch gekennzeichnet, dass** als Bildprojektoren (1, 2, 3) solche verwendet werden, mit denen Betrachtern der Visualisierung eine dreidimensionale Bildwirkung vermittelbar ist.

19. Verfahren nach einem der Ansprüche 11 bis 18, **dadurch gekennzeichnet, dass** mindestens ein zur Digitalisierung von Mustern existierender Dekore, Schichtstoffe, Echtmaterialien und/oder von dreidimensionalen Oberflächenstrukturen verwendeter Scanner sowie zur Visualisierung der Dekore und/oder Oberflächenstrukturen verwendete Ausgabegeräte, insbesondere Bildschirme (14), Bildprojektoren (1, 2, 3) und/oder Farbdrucker, kalibriert und/oder profiliert werden.

## Claims

1. System for visualising decorative designs, in particular decorative wood designs, comprising at least one projector as an image projector (1, 2, 3), in particular an LCD or DLP projector, and a spatial projection surface (4) which has different partial surfaces (4.1, 4.2, 4.3, 4.4), wherein the at least one image projector (1, 2, 3) is provided with a control unit (5), which is configured such that different decorative designs, which can be selected from a group of different decorative designs using the control unit (5), can be visualised on the partial surfaces (4.1, 4.2, 4.3, 4.4) of the projection surface (4), wherein the group of different decorative designs includes in particular such decorative designs which have been obtained by scanning or digitising decorative design patterns having surface structures, and wherein the projection surface (4) includes at least one body (4.4) as a projection partial surface.

2. System according to claim 1, **characterised in that** the control unit (5) is configured such that at least one decorative design, which can be selected from a group of different decorative designs using the control unit (5), can be visualised on the projection surface (4,4.1,4.2,4.3,4.4), superimposed with at least one surface structure, which can be selected from a group of different surface structures using the control unit (5).

3. System according to either claim 1 or claim 2, **characterised in that** the projection surface (4) includes at least a wall (4.1, 4.2) and a floor portion (4.3).

4. System according to any of claims 1 to 3, **characterised in that** the at least one body (4.4) is provided with handles and/or door hardware.

5. System according to any of claims 1 to 4, **characterised in that** the at least one body (4.4) is composed of at least two body portions (4.41, 4.42) having different heights and/or sizes.

6. System according to any of claims 1 to 5, **characterised in that** the at least one body (4.4) is provided with a monochrome coating/coat of paint as a projection surface.

7. System according to any of claims 1 to 6, **characterised in that** the control unit (5) is configured such that one or more objects, in particular electrical appliances (7), fittings, handles, door hardware and/or home accessories (12), which can be selected from a group of different objects using the control unit, can be visualised on the projection surface (4, 4.4) in a manner which is complementary to the at least one decorative design.

8. System according to any of claims 1 to 7, **characterised by** a plurality of image projectors (1, 2, 3) which are assigned to different partial surfaces (4.1, 4.2, 4.3, 4.4) of the projection surface (4).

9. System according to any of claims 1 to 8, **characterised in that** the control unit (5) is configured such that a three-dimensional image effect is produced by means of the at least one image projector or the image projectors (1, 2, 3).

10. System according to any of claims 1 to 9, **characterised in that** a reader for recognising identification means applied to different decorative design patterns is connected to the control unit (5).

11. Method for visualising decorative designs, **characterised by** the use of at least one projector as an image projector (1, 2, 3), in particular an LCD or DLP projector, and a spatial projection surface (4), which has different partial surfaces (4.1, 4.2, 4.3, 4.4), the at least one image projector (1, 2, 3) being controlled such that different decorative designs, which are selected from a group of different decorative designs using the control unit (5), are visualised on the partial surfaces (4.1, 4.2, 4.3, 4.4) of the projection surface (4), the group of different decorative designs in particular including such decorative designs which have been obtained by scanning or digitising decorative design patterns having surface structures, the projection surface (4) including at least one body (4.4) as a projection partial surface.

12. Method according to claim 11, **characterised in that** at least one of the decorative designs is visualised superimposed with at least one surface structure, which is selected from a group of different surface structures.

13. Method according to either claim 11 or claim 12, **characterised in that** the at least one body (4.4) is provided with handles and/or door hardware.

14. Method according to any of claims 11 to 13, **characterised in that** the at least one body (4.4) is composed of at least two body portions (4.41, 4.42) having different heights and/or sizes.

15. Method according to any of claims 11 to 14, **characterised in that** the at least one body (4.4) is provided with a monochrome coating/coat of paint as a projection surface.

16. Method according to any of claims 11 to 15, **characterised in that** the at least one image projector (1, 2, 3) is controlled such that one or more objects (7, 11, 12), in particular electrical appliances, fittings and/or home accessories, which can be selected from a group of different objects (7, 11, 12) using the control unit (5), are visualised on the projection surface in a manner which is complementary to the at least one decorative design.

17. Method according to any of claims 11 to 16, **characterised in that** a plurality of image projectors are used, the image projectors (1, 2, 3) being assigned to different partial surfaces (4.1, 4.2, 4.3, 4.4) of the projection surface (4).

18. Method according to any of claims 11 to 17, **characterised in that** image projectors (1, 2, 3) are used of the type by means of which a three-dimensional image effect can be conveyed to observers of the visualisation.

19. Method according to any of claims 11 to 18, **characterised in that** at least one scanner used for digitising patterns of existing decorative designs, laminates, natural materials and/or three-dimensional surface structures, and output devices, in particular screens (14), image projectors (1, 2, 3) and/or colour printers, used for visualising the decorative designs and/or surface structures, are calibrated and/or profiled.

## Revendications

1. Agencement pour la visualisation de décors, en particulier de décors bois, avec au moins un vidéoprojecteur en tant que projecteur d'images (1, 2, 3), en particulier un vidéoprojecteur LCD ou DLP, et une surface de projection tridimensionnelle (4) qui comprend plusieurs surfaces partielles (4.1, 4.2, 4.3, 4.4) différentes, sachant que le projecteur d'images (1, 2, 3) au moins prévu est doté d'une commande (5) qui est conçue de telle manière que des décors différents, qui peuvent être choisis à partir d'un groupe de différents décors au moyen de la commande (5), puissent être visualisés sur les surfaces partielles (4.1, 4.2, 4.3, 4.4) de la surface de projection (4), le groupe des différents décors comprenant en particulier des décors qui ont été obtenus par scannage ou par numérisation de modèles de décors dotés de structures de surface, et sachant que la surface de projection (4) comprend au moins un corps (4.4) en tant que surface de projection partielle.

2. Agencement selon la revendication 1,
**caractérisé en ce que** la commande (5) est conçue de telle manière que, sur la surface de projection (4, 4.1, 4.2, 4.3, 4.4), puisse être visualisé au moins un décor qui, pouvant être choisi à partir d'un groupe de différents décors, au moyen de la commande (5), est recouvert d'au moins une structure de surface, qui peut être choisie à partir d'un groupe de différentes structures de surface au moyen de la commande (5).

3. Agencement selon revendication 1 ou 2,
**caractérisé en ce que** la surface de projection (4) comprend au moins un mur (4.1,4.2) et une section de plancher (4.3).

4. Agencement selon l'une des revendications 1 à 3,
**caractérisé en ce que** le corps (4.4) au moins prévu est doté de poignées et / ou de ferrures.

5. Agencement selon l'une des revendications 1 à 4,
**caractérisé en ce que** le corps (4.4) au moins prévu est composé d'au moins deux sections de corps (4.41. 4.42) de hauteur et / ou de grosseur différentes.

6. Agencement selon l'une des revendications 1 à 5,
**caractérisé en ce que** le corps (4.4) au moins prévu est pourvu d'un revêtement / d'une laque uni en tant que surface de projection.

7. Agencement selon l'une des revendications 1 à 6,
**caractérisé en ce que** la commande (5) est conçue de telle manière que, sur la surface de projection (4, 4.4), soient visualisés, en complément du décor au moins prévu, un ou plusieurs objets, en particulier des appareils électriques (7), des armatures, des poignées, des ferrures et / ou des accessoires d'aménagement intérieur (12), qui peuvent être choisis à partir d'un groupe de différents objets, au moyen de la commande.

8. Agencement selon l'une des revendications 1 à 7,
**caractérisé par** plusieurs projecteurs d'images (1, 2, 3) qui sont associés à différentes surfaces partielles (4.1, 4.2, 4.3, 4.4) de la surface de projection (4).

9. Agencement selon l'une des revendications 1 à 8,
**caractérisé en ce que** la commande (5) est conçue de telle manière qu'un effet tridimensionnel de l'image soit généré au moyen du projecteur d'images au moins prévu ou des projecteurs d'images (1,2,3).

10. Agencement selon l'une des revendications 1 à 9,
**caractérisé en ce qu'** un appareil de lecture est raccordé à la commande (5) pour la saisie de moyens d'identification pourvoyant des modèles de décors différents.

11. Procédé de visualisation de décors,
**caractérisé par** l'utilisation d'au moins un vidéoprojecteur en tant que projecteur d'images (1, 2, 3), en particulier vidéoprojecteur LCD ou DLP, et d'une surface de projection tridimensionnelle (4) qui comprend plusieurs surfaces partielles (4.1, 4.2, 4.3, 4.4) différentes, sachant que le projecteur d'images (1, 2, 3) au moins prévu est commandé de telle manière que, sur les surfaces partielles (4.1, 4.2, 4.3, 4.4) de la surface de projection (4), des décors différents, choisis à partir d'un groupe de différents décors, puissent être visualisés au moyen de la commande (5), sachant que le groupe de décors différents comprend en particulier des décors qui ont été obtenus par scannage ou par numérisation de modèles de décors dotés de structures de surface, et sachant que la surface de projection (4) comprend au moins un corps (4.4) en tant que surface de projection partielle.

12. Procédé selon la revendication 11,
**caractérisé en ce que** l'un des décors est visualisé avec au moins une structurer de surface superposée, qui est choisie à partir d'un grouper de différentes structures de surface.

13. Procédé selon revendication 11 ou 12,
**caractérisé en ce que** le corps (4.4) au moins prévu est pourvu de poignées et / ou de ferrures.

14. Procédé selon l'une des revendications 11 à 13,
**caractérisé en ce que** le corps (4.4) est composé d'au moins deux sections de corps (4.41. 4.42) de hauteur et / ou de grosseur différentes.

15. Procédé selon l'une des revendications 11 à 14,
**caractérisé en ce que** le corps (4.4) au moins prévu est pourvu d'un revêtement / d'une laque uni/e en tant que surface de projection.

16. Procédé selon l'une des revendications 11 à 15,
**caractérisé en ce que** le projecteur d'images (1, 2, 3) est commandé de telle manière que, sur la surface de projection (4,4.4), un ou plusieurs objets (7, 11, 12), en particulier des appareils électriques, des armatures, des poignées, des ferrures et / ou des accessoires d'aménagement intérieur (12), qui peuvent être choisis à partir d'un groupe de différents objets (7, 11, 12), soient visualisés, au moyen de la commande (5), en complément du décor au moins prévu.

17. Procédé selon l'une des revendications 11 à 16,
**caractérisé en ce que** plusieurs projecteurs d'images (1, 2, 3) sont associés à différentes surfaces partielles (4.1, 4.2, 4.3, 4.4) de la surface de projection (4).

18. Procédé selon l'une des revendications 11 à 17,
**caractérisé en ce que**, comme projecteur d'images (1, 2, 3), sont utilisés des projecteurs, avec lesquels une image dimensionnelle peut être présentée.

19. Procédé selon l'une des revendications 11 à 18,
**caractérisé en ce que** sont calibrés et / ou profilés au moins un scanner, utilisé pour la numérisation de modèles de décors existants, de matériaux stratifiés, de matières naturelles et / ou de structures de surface tridimensionnelles, et / ou des appareils de sortie d'images, utilises pour la visualisation de décors et / ou de structures de surface, en particulier écrans de visualisation (14), projecteurs d'images (1, 2, 3) et / ou imprimantes couleur.
